# EUROPÄISCHE PATENTSCHRIFT

(11) **EP 1 490 596 B1**
(45) Veröffentlichungstag und Bekanntmachung des Hinweises auf die Patenterteilung: **16.01.2013**
(21) Anmeldenummer: 03714645.3
(22) Anmeldetag: 20.02.2003
(51) Int. Cl.: F02N 11/08, F02N 11/10, B60K 28/10

(54) **STARTVORRICHTUNG FÜR EINE BRENNKRAFTMASCHINE SOWIE VERFAHREN ZUM STARTEN EINER BRENNKRAFTMASCHINE**
STARTER DEVICE FOR AN INTERNAL COMBUSTION ENGINE AND METHOD FOR STARTING AN INTERNAL COMBUSTION ENGINE
DISPOSITIF DE DEMARRAGE POUR MOTEUR A COMBUSTION INTERNE ET PROCEDE DE DEMARRAGE D'UN MOTEUR A COMBUSTION INTERNE

(30) Priorität: 21.03.2002 DE 10212510; 27.08.2002 DE 10239150
(43) Veröffentlichungstag der Anmeldung: 29.12.2004
(73) Patentinhaber: ROBERT BOSCH GMBH, 70442 Stuttgart (DE)
(72) Erfinder: DENZ, Helmut, 70184 Stuttgart (DE)
(86) Internationale Anmeldenummer: PCT/DE2003/000524
(87) Internationale Veröffentlichungsnummer: WO 2003/081026

(56) Entgegenhaltungen:
- EP-A- 0 363 933
- DE-A- 19 532 484
- DE-A- 19 811 176
- DE-A- 19 844 454
- PATENT ABSTRACTS OF JAPAN vol. 017, no. 701 (M-1533), 21. Dezember 1993 (1993-12-21) -& JP 05 240132 A (AISIN SEIKI CO LTD), 17. September 1993 (1993-09-17)
- PATENT ABSTRACTS OF JAPAN vol. 1997, no. 06, 30. Juni 1997 (1997-06-30) & JP 09 053551 A (JATCO CORP), 25. Februar 1997 (1997-02-25)

## Beschreibung

Die Erfindung betrifft eine Startvorrichtung für eine Brennkraftmaschine gemäß dem Oberbegriff des Anspruchs 1 sowie ein Verfahren zum Starten einer Brennkraftmaschine gemäß dem Oberbegriff des Anspruchs13.

Eine derartige Startvorrichtung und ein derartiges Startverfahren sind beispielsweise aus der JP 05-240132 oder aus der DE 195 32 484 A1 bekannt. Dort wird zur Erhöhung der Sicherheit des Startvorgangs vorgeschlagen, den Leistungsschaltbaustein durch Vorsehen zweier in Reihe geschalteter Leistungsschalter redundant auszuführen. Die Startvorrichtung kann dann bestimmte Betriebsstörungen tolerieren, so z.B. das "Hängenbleiben" eines der Leistungsschalter in einem geschlossenen Schaltzustand. Auch ein fehlerhaftes, nicht auf einer Aktivierung durch die Steuerelektronik beruhendes Ansteuern eines der Leistungsschalter führt bei einer geeigneten Auslegung der in der DE 195 32 484 A1 ausgeführten Leistungsschalter nicht zu einer ungewollten Einleitung des Startvorgangs. Nicht gelöst sind mit der Startvorrichtung der DE 195 32 484 A1 Probleme, die mit einem Ausfall der Steuerelektronik im Zuge des Startvorgangs zusammenhängen.

Die DE 198 11176 A1 offenbart eine Anordnung und ein Verfahren zur Steuerung einer elektrischen Maschine, insbesondere zur Steuerung eines elektrischen Starters zum Andrehen einer Brennkraftmaschine, mit einem Schaltmittel zur Herstellung einer elektrischen Verbindung zwischen einer Spannungsquelle und dem elektrischen Starter, wobei der elektrische Starter bei einer Betätigung des Schaltmittels über eine einspurbare Übersetzung mit einem Kurbeltrieb der Brennkraftmaschine kuppelbar ist. Weiterhin ist vorgesehen, dass in der Verbindung zwischen der Spannungsquelle und dem elektrischen Starter ein elektronisches Steuergerät angeordnet ist, über das eine Spannung und/oder ein Strom und/oder eine Einschaltzeit für den elektrischen Starter steuerbar ist.

Beim Starten einer Brennkraftmaschine ist sicherzustellen, dass die Steuerelektronik auf keinen Fall den Start einleiten kann, solange die Brennkraftmaschine nicht für den Start eingerichtet ist. Bei einer Brennkraftmaschine mit einem Antriebsstrang und einem Motor soll insbesondere dann kein Start erfolgen, wenn und so lange ein Kraftschluss zwischen dem Antriebsstrang und dem Motor besteht. Eine Sicherung gegen ein fehlerhaftes Startverhaiten einer Brennkraftmaschine ist bei den bestehenden Start-vorrichtungen bzw. -verfahren noch nicht in ausreichendem Maße gegeben.

Es ist daher eine erste Aufgabe der vorliegenden Erfindung, eine Startvorrichtung der eingangs genannten Art derart weiterzubilden, dass Betriebszustände der Brennkraftmaschine, bei denen ein Start nicht erfolgen sollte, sicher zu erkennen, wodurch ein Startversuch während eines derartigen Betriebszustands unterbunden werden kann und ggf. eine Warnung des Fahrers ermöglicht wird.

Diese Aufgabe ist erfindungsgemäß gelöst durch eine Startvorrichtung mit den im Anspruch 1 angegebenen Merkmalen.

Die Freigabeeinrichtung stellt sicher, dass die Steuerelektronik den mindestens einen Leistungsschaltbaustein nur bei einer Freigabe schalten kann. Das Freigabesignal kann bei einer Brennkraftmaschine mit Automatikgetriebe z.B. durch ein P/N-Signal in Park- oder Neutralposition des Wählhebels des Automatikgetriebes erzeugt werden. Bei einer Brennkraftmaschine mit einem Automatikgetriebe mit Start-Stop-Automatik kann das Freigabesignal auch generiert werden, wenn der Wählhebel des Automatikgetriebes in Fahrposition steht und der Motor bei einem Stillstand des durch die Brennkraftmaschine angetriebenen Fahrzeugs durch die Steuerelektronik abgestellt wird. Bei einer Brennkraftmaschine mit einem Handschaltgetriebe wiederum kann das Freigabesignal durch einen Interlockschalter oder durch einen Kupplungssensor, z.B. durch ein Kupplungspotentiometer, bereitgestellt werden. Mit diesem ist erkennbar, dass die Kupplung voll getreten ist und eine Kraftschlussunterbrechung zwischen dem Triebstrang und dem Motor vorliegt.

Durch den vom Freigabesignal abhängigen Startvorgang wird sicher verhindert, dass die Brennkraftmaschine bei Vorliegen eines für den Start ungeeigneten Betriebszustandes, z.B. bei Vorliegen eines Kraftschlusses zwischen Antriebsstrang und Motor, gestartet wird. Der erste und der zweite Freigabe-Schaltkanal haben hierbei eine redundante Funktion. Der erste, von der Steuerelektronik unabhängiges Freigabe-Schaltkanal stellt die Funktion der Freigabeeinrichtung auch bei einem Fehler in der Steuerelektronik sicher. Durch den von der Steuerelektronik unabhängig arbeitenden ersten Freigabe-Schaltkanal wird dabei eine ungewollte Starter-Ansteuerung bei nicht vorliegendem Freigabesignal aufgrund einer Fehlfunktion der Steuerelektronik sicher verhindert. Gleichzeitig führt ein Fehler im ersten Freigabe-Kanal nicht zu einem fehlerhaften Start, solange die Steuerelektronik korrekt arbeitet, da dann der zweite Freigabe-Schaltkanal wirksam bleibt. Im Zuge eines normalen Startvorgangs kann über die Diagnoseeinrichtung die Funktion des ersten Freigabe-Schaltkanals geprüft werden, so dass dort ggf. auftretende schlafende Bauteilfehler, z.B. ein Kurzschluss nach Masse, sicher erkannt werden. Die Funktion der Startvorrichtung kann trotz eines

Fehlers im ersten Freigabe-Signal erhalten bleiben, so dass ein Betrieb der Brennkraftmaschine weiter möglich ist.

Mit der Startvorrichtung lässt sich die Funktion des ersten Freigabe-Schaltkanals in Bezug auf den durch die Steuerelektronik nicht deaktivierten Leistungsschaltbaustein prüfen. Bei korrekter Funktion des ersten Freigabe-Schaltkanals wird der durch die Steuerelektronik nicht-deaktivierte Leistungsschaltbaustein durch den in diesem Falle sperrenden ersten Freigabe-Schaltkanal am Schalten gehindert. Wenn der erste Freigabe-Schaltkanal außer Funktion ist, führt dies bei der Diagnose nicht zu einer Fehlfunktion der Startvorrichtung, da über den durch die Steuerelektronik redundant deaktivierten Leistungsschaltbaustein ein Start in jedem Fall unterbunden ist.

Ein erster Freigabe-Schaltkanal gemäß Anspruch 2 kann baulich einfach ausgeführt sein.

Ein zweiter Freigabe-Schaltkanal gemäß Anspruch 3 kann durch ein Auswerteprogramm bestimmter, in der Regel sowieso vorliegender Betriebszustandssensoren durch die Steuerelektronik realisiert sein.

Ein A/D-Wandler gemäß Anspruch 4 führt zu einer präzisen Erfassung der Freigabe-Schaltstellung, die insbesondere von der Steuerelektronik ausgewertet werden kann.

Eine wechselnde Deaktivierung von Leistungsschaltbausteinen mit der Diagnoseeinrichtung gemäß Anspruch 5 führt zu einer Überprüfung der

Funktion der diesen Leistungsschaltbausteinen zugeordneten Freigabesignale bzw. der diesen Leistungsschaltbausteinen zugeordneten Abschnitte des ersten Freigabe-Schaltkanals.

Gemäß Anspruch 6 kann die Deaktivierung der Leistungsschaltbausteine über die Diagnoseeinrichtung nach einer vorgegebenen Deaktivierungssequenz erfolgen. Bei zwei Leistungsschaltbausteinen kann die Deaktivierung bei aufeinander folgenden Startvorgängen z.B. alternierend erfolgen. Auf diese Weise wird sichergestellt, dass tatsächlich die Freigabesignale für alle Leistungsschaltbausteine mittels der Diagnoseeinrichtung überwacht werden können.

Eine Diagnoseeinrichtung gemäß Anspruch 7 stellt sicher, dass bei fehlerhaftem ersten Freigabe-Schaltkanal kein Startvorgang erfolgen kann. Zudem kann die Diagnoseeinrichtung so ausgelegt sein, dass sie auch die dann durch die Steuerelektronik eingeleitete Deaktivierung aller Leistungsschaltbausteine überwacht, was zusätzlich zur Diagnose des ersten Freigabe-Schaltkanals auch eine Diagnose der Funktion der Leistungsschaltbausteine ermöglicht.

Aufgrund der Redundanz der beiden Freigabe-Schaltkanäle ist auch dann noch ein korrekter Betrieb der Startvorrichtung möglich, wenn der erste Freigabe-Startkanal einen Fehler aufweist. Da in diesem Fall die Sicherheit der Startvorrichtung reduziert ist, wird gemäß Anspruch 8 ein Warnsignalgeber angesteuert, so dass der Fehler erkannt und behoben werden kann.

Ein Fehlereintrag in einem Speichermedium gemäß Anspruch 9 erleichtert die Fehlerbehebung.

Ein Drehzahlsensor gemäß Anspruch 10 führt zu einem sicheren Erfassen des Kraftflusses der Brennkraftmaschine, also des Vorliegens einer kraftschlüssigen Verbindung zwischen dem Antriebsstrang und dem Motor.

Bei vielen Brennkraftmaschinen wird eine Mehrzahl von Betriebsparametern routinemäßig überwacht. Hierzu gehören z.B. das Vorliegen eines Interlocksignals, die Stellung des Wählhebels eines Automatikgetriebes, das Vorliegen eines Kraftschlusses zwischen Antriebsstrang und Motor der Brennkraftmaschine, die Drehzahl der Brennkraftmaschine oder die Stellung eines Kupplungspedals. Diese verschiedenen Betriebszuständen der Brennkraftmaschine zugeordneten Betriebsparameter können gemäß Anspruch 11 zur Erhöhung der Sicherheit des Startvorgangs der Brennkraftmaschine genutzt werden, indem durch Vergleich der erfassten Betriebsparameter eine Plausibilisierung der einzelnen Freigabesignale durchgeführt wird.

Mindestens ein Kraftschluss-Sensor gemäß Anspruch 12 führt zum sicheren Erfassen eines Betriebszustandes der Brennkraftmaschine.

Eine weitere Aufgabe der Erfindung ist es, ein Verfahren zum Starten einer Brennkraftmaschine der eingangs genannten Art möglichst sicher auszugestalten.

Diese Aufgabe ist erfindungsgemäß gelöst durch ein Verfahren mit den im Anspruch 13 angegebenen Merkmalen.

Die Vorteile des Verfahrens gemäß den Ansprüchen 13 bis 22 ergeben sich aus den genannten Vorteilen der entsprechenden Startvorrichtung.

Ein Ausbildungsbeispiel der Erfindung wird nachfolgend anhand der Zeichnung näher erläutert. In dieser zeigen:
Fig. 1 ein Schaltbild einer erfindungsgemäßen Startvorrichtung; und
Fig. 2 ein Flussdiagramm, welches ein erfindungsgemäßes Verfahren zum Starten der Brennkraftmaschine zeigt.

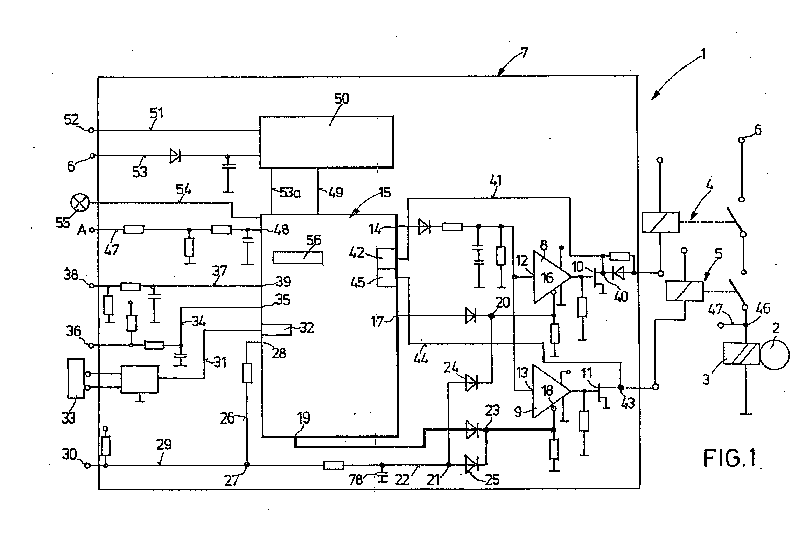

Eine in Figur 1 insgesamt mit dem Bezugszeichen 1 versehene Startvorrichtung dient dem Starten einer in Figur 1 nicht dargestellten Brennkraftmaschine über einen Anlasser 2, der als elektrischer Startermotor ausgeführt ist und von einem Magnetschalter 3 geschaltet wird. Letzterer wird über zwei Anlasserrelais 4, 5, die in Reihe geschaltet sind, angesteuert, die im geschlossenen Zustand den Anlasser 2 mit einer Spannungsquelle 6 verbinden. Die Ansteuerung de Anlassretais 4, 5 wiederum erfolgt über eine insgesamt mit dem Bezugszeichen 7 bezeichneten Schaltsteuereinrichtung.

Als Endstufen innerhalb der Schaltsteuereinrichtung 7 zur Ansteuerung der Ansteuerrelais 4, 5 dienen zwei als Ansteuergatter geschaltete Leistungsverstärker 8, 9 mit Anlasser-Endstufenstransistoren 10, 11 als Ansteuerstufen. Eingangsklemmen 12, 13 der Leistungsverstärker 8, 9 sind miteinander und mit einem Aktivierungsausgang eines Steuerelektronik-Bausteins 15 verbunden, der einen Mikrocomputer und einen internen Datenspeicher 56 aufweist. Zwischen dem Ausgang des Anlasser-Endstufentransistors 10 und dem Anlasserrelais 4 liegt ein Verzweigungspunkt 40, mit dem über eine erste Diagnoseleitung 41 ein erster A/D-Wandler 42 des Steuerelektronik-Bausteins 15 verbunden ist. Zwischen dem Ausgang des Anlasser-Endstufentransistors 11 und dem Anlasserrelais 5 liegt ein zweiter Verzweigungspunkt 43, der über eine zweite Diagnoseleitung 44 mit einem zweiten A/D-Wandler 45 des Steuerelektronik-Bausteins 15 verbunden ist. Eine Steuerklemme 16 des Leistungsverstärkers 8 ist mit einem ersten Deaktivierungsausgang 17 und eine Steuerklemme 18 des Leistungsverstärkers 9 ist mit einem zweiten Deaktivierungsausgang 19 des Steuerelektronik-Bausteins 15 verbunden.

Über einen Verbindungsknoten 20 zwischen dem ersten Deaktivierungsausgang 17 und der Steuerklemme 16 steht ein Verzweigungsknoten 21 eines Hardware-Freigabe-Schaltkanals 22 mit dem ersten Leistungsverstärker 8 in Verbindung. Über einen zweiten Verhindungsknoten 23 zwischen dem zweiten Deaktivierungsausgang 19 und der zweiten Steuerklemme 18 steht der Verzweigungsknoten 21 mit dem zweiten Leistungsverstärker 9 in Verbindung. Zwischen dem Verzeigungsknoten 21 und dem ersten Verbindungsknoten 20 ist eine erste Entkopplungsdiode 24 in Durchlassrichtung angeordnet. Zwischen dem Verzweigungsknoten 21 und dem zweiten Verbindungsknoten 23 ist eine zweite Entkopplungsdiode 25 in Durchlassrichtung angeordnet.

Der Hardware-Freigabe-Schaltkanal 22 ist mit einem Software-Freigabe-Schaltkanal 26 über einen Freigabe-Verzweigungsknoten 27 zusammengeführt. Zwischen dem Hardware-Freigabe-Schaltkanal 22 und Masse ist ein Kondensator 78 angeordnet. Dieser liegt zwischen dem Freigabe-Verzweigungsknoten 27 und dem Verzweigungsknoten 21. Der Software-Freigabe-Schaltkanal 26 ist zwischen dem Freigabe-Verzweigungsknoten 27 und einem Freigabe-Eingang 28 des Steuerelektronik-Bausteins 15 angeordnet. Die zusammengeführten Freigabe-Schaltkanäle 22, 26 bilden einen Haupt-Freigabe-Signalkanal 29, mit dem sie mit einem ersten Freigabesensor 30 verbunden sind. Wenn die Brennkraftmaschine mit einem Automatikgetriebe ausgestattet ist, erfasst der Freigabesensor 30, ob ein Wählhebel für das Automatikgetriebe in P-Stellung, d.h. Park-Stellung, oder in N-Stellung, d.h. NeutralStellung, steht. Weist die Brennkraftmaschine mit Automatikgetriebe zudem eine Start-Stop-Automatik auf, bei der die Brennkraftmaschine dann, wenn sie nicht benötigt wird, abgestellt wird, erfasst der Freigabesensor 30 direkt am Getriebe, ob ein Kraftschluss zwischen Getriebeeingang und Getriebeausgang vorhanden ist. Bei einer Brennkraftmaschine mit Handschaltgetriebe erfasst der Freigabesensor 30 die Stellung eines Kupplungspedals. In all diesen Varianten arbeitet der Freigabesensor 30 so, dass auf dem Haupt-Freigabe-Signalkanal 29 ein Freigabesignal mit dem Signalpegel "Low" vorliegt, wenn kein Kraftschluss zwischen der Brennkraftmaschine und ihrem Antriebstrang gegeben ist.

Insbesondere im Falle eines Automatikgetriebes steht über einen ersten Hilfs-Freigabe-Signalkanal 31 ein Hilfs-Freigabe-Eingang 32 des Steuerelektronik-Bausteins 15 mit einer Getriebesteuerung 33 in Verbindung, welche redundant zum Freigabesensor 30 erfasst, ob ein Kraftschluss zwischen der Brennkraftmaschine und ihrem Antriebsstrang vorliegt. Insbesondere im Falle eines Handschaltgetriebes steht über einen weiteren Hilfs-Freigabe-Signalkanal 34 ein weiterer Hilfs-Freigabe-Eingang 35 des Steuerelektronik-Bausteins 15 mit einem z.B. als Potentiometer ausgebildeten Kupplungsschalter 36 in Verbindung, welcher bei einer Brennkraftmaschine mit Handschaltgetriebe eine beginnende Kraftschlussunterbrechung zwischen der Brennkraftmaschine und ihrem Antriebsstrang erfasst, was im Steuerelektronik-Baustein 15 für Fahrkomfortfunktionen der Brennkraftmaschine ausgenutzt wird.

Eine Startleitung 37 verbindet ein Start-Bedienelement 38, z.B. ein Zühdschloss, mit einem Starteingang 39 des Steuerelektronik-Bausteins 15.

Über einen Verzweigungspunkt 46 zwischen dem Anlasserrelais 5 und dem Magnetschalter 3 ist eine Magnetschalter-Diagnoseleitung 47 mit einem Magnetschalter-Diagnoseeingang 48 des Steuerelektronik-Bausteins 15 verbunden. Der Übersichtlichkeit halber ist die Magnetschalter-Diagnoseleitung 47 in Fig. 1 über die Verbindung A-A unterbrochen dargestellt.

Über eine Steuer/Datenleitung 49 ist der Steuerelektronik-Baustein 15 mit einem Drehzahlaufbereitungsbaustein 50 verbunden. Dieser steht über eine Signalleitung 51 mit einem Drehzahlsensor 52 und über eine Versorgungsleitung 53 mit der Spannungsquelle 6 in Verbindung.

Über eine Ausgabeleitung 54 ist der Steuerelektronik-Baustein 15 mit einer Warnlampe 55 verbunden.

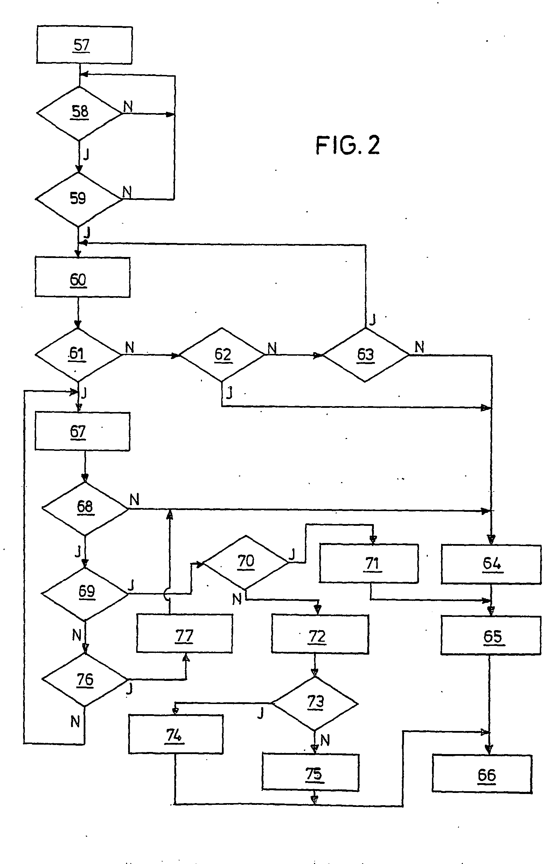

Ein Verfahren zum Starten der Brennkraftmaschine über den Anlasser 2, welches eine Diagnose der vom Freigabesignal auf dem Haupt-Freigabe-Signalkanal 29 abhängigen Schaltung des zweiten Leistungsverstärkers 9 über den Hardware-Freigabe-Schaltkanal 22 umfasst, wird nachfolgend anhand des Flußdiagramms von Fig. 2 erläutert:
In einem Initialisierungsschritt 57 wird zunächst die Versorgungsspannung für die Startvorrichtung 1 eingeschaltet.

Wenn der Start der Brennkraftmaschine erfolgen soll, muss bei einer Brennkraftmaschine mit Automatikgetriebe der Benutzer den Wählhebel in P/N-Position bringen bzw. bei einer Brennkraftmaschine mit Handschaltgetriebe die Kupplung treten. Dadurch spricht der Freigabesensor 30 an und das Signal auf dem Haupt-Freigabe-Sigralkanal 29 wird in ein Freigabesignal mit dem Signalpegel "Low" geschaltet. Durch das Freigabesignal werden über den Hardware-Freigabe-Schaltkanal 22, den Verzweigungsknoten 21, die Entkopplungsdioden 24, 25, die Verbindungsknoten 20, 23 sowie die Steuerklemmen 16, 18 die beiden Leistungsverstärker 8, 9 freigegeben, so dass sie vom Steuerelektronik-Baustein 15 über die Eingangsklemmen 12,13geschaltet werden können. Das Abfallen des Pegels auf dem Haupt-Freigabe-Signalkanal 29 auf "Low" wird über den Freigabe-Eingang 28 des Steuerelektronik-Bausteins 15 im Abfrageschritt 58 abgefragt. Diese Abfrage erfolgt so lange, bis das Signal auf dem Haupt-Freigabe-Signalkanal 29 tatsächlich "Low" ist, d.h. bei negativem Ergebnis N des Abfrageschritts 58 wird dieser wiederholt. Bei positivem Ergebnis J des Abfrageschritts 58 erfolgt über den Starteingang 39 in einem Abfrageschritt 59, ob auf der Startleitung 37 ein Startpegel "High" anliegt. Bei negativern Ergebnis N des Abfrageschritts 59 wird der Abfrageschritt 58 erneut durchgerührt.

Wenn der Benutzer das Start-Bedienelement 38 betätigt und damit ein "High"-Pegel auf der Startleitung 37 anliegt, steuert der Steuerelektronik-Baustein 15 in einem Aktivierungsschritt 60 die beiden Leistungsverstärker 8, 9 und somit die beiden Anlasser-Endstufentransistoren 10, 11 und die beiden Anlasserrelais 4, 5 an und betätigt somit über den Magnetschalter 3 den Anlasser 2. Dies erfolgt, indem der Signalpegel auf dem Aktivierungsausgang 14 auf "High" gesetzt wird, wobei gleichzeitig die Deaktivierungsausgänge 17, 19 den Signalpegel "Low" haben.

Das Hochlaufen der Brennkraftmaschine wird anschließend durch Abfragen des Drehzahlsensor 52 durch den Steuerelektronik-Baustein 15 über die Steuer/Datenleitung 49, den Drehzahlaufbereitungsbaustein 50 rund die Signalleitung 51 durchgeführt. Dies erfolgt in einem Abfrageschritt 61. Bei negativem Abfrageergebnis N des Abfrageschritts 61 wird über einen im Start-Bedienelement 38 integrierten Zeitbaustein in einem Abfrageschritt 62 abgefragt, ob eine bestimmte maximale Startdauer schon erreicht ist. Bei negativem Abfrageergebnis N des Abfrageschritts 62 erfolgt in einem Abfrageschritt 63 eine weitere Abfrage des Signalpegels auf dem Freigabe-Eingang 28, indem geprüft wird, ob das Freigabesignal auf dem Software-Freigabe-Schaltkanal 26 immer noch den Signalpegel "Low" hat. Bei positivem Abfrageergebnis J bleiben die Leistungsverstärker 8 und 9 angesteuert und es wird mit dem Aktivierungsschritt 60 fortgefahren und der Betrieb des Anlassers 2 fortgesetzt.

Bei negativem Abfrageergebnis N des Abfrageschritts 63 sowie bei positivem Abfrageergebnis J des Abfrageschritts 62 wird in einem Speicherschritt 64 im Datenspeicher 56 des Steuerelektronik-Bausteins 15 abgelegt, dass die Brennkraftmaschine einen Betriebszustand aufweist, in dem keine Diagnose des Hardware-Freigabe-Schaltkanlals 22 möglich ist. In einem Deaktivierungsschritt 65 werden anschließend durch "High"-Setzen der beiden Deaktivierungsausgänge 17, 19 die beiden Leistungsverstärker 8, 9 deaktiviert und in einem Ausgabeschritt 66 im Datenspeicher 56 die Information abgelegt, dass ein fehlgeschlagenes Ende des Startverfahrens erreicht ist. Das negative Abfrageergebnis N des Abfrageschritts 63 entspricht der Situation, dass ein Kraftschluss über den Haupt-Freigabe-Signalkanal 29 detekfiert wird, während die Brennkraftmaschine noch startet. In diesem Fall wird die Ansteuerung des Magnetschalters 3 über den Deaktivierungsschritt 65 unabhängig vom Hardware-Freigabe-Schaltkanal 22 in jedem Fall abgebrochen bzw. gar nicht erst begonnen. Die Einträge in den Datenspeicher 56 aus den Schritten 64 und 66 werden anschließend vom Steuerelektronik-Baustein 15 an ein entsprechendes Ausgabemedium, z.B. einen LCD-Bildschirm (nicht dargestellt) weitergegeben.

Bei positivem Ergebnis J des Abfrageschritts 61, also wenn die Brennkraftmaschine hochgelaufen ist, wird durch den Steuerelektronik-Baustein 15 in einem Teildeaktivierungsschritt 67 zunächst nur der erste Leistungsverstärker 8 durch "High"-Setzen des Signalpegels auf dem ersten Deaktivierungsausgang 17 ausgeschaltet. Das Deaktivieren des ersten Leistungsverstärkers 8 führt über den Anlasser-Endstufentransistor 10 und das Anlasserrelais 4 zur Unterbrechung der Verbindung zwischen der Spannungsquelle 6 und dem Magnetschalter 3 und damit zum Abschalten des Anlassers 2. Nun wird in einem Abfrageschritt 68 über den Magnetschalter-Diagnose-Eingang 48 geprüft, ob der Anlasser 2 tatsächlich abgeschaltet ist. Dies ist bei einem Wechsel des Pegels auf dem Magnetschalter-Diagnose-Eingang 48 von "High" nach "Low" gegeben. In diesem Fall ist das Ergebnis des Abfrageschritts 68, ob das Signal auf der Magnetschalter-Diagnoseleitung 47 "Low" ist, positiv J. Bei negativem Ergebnis N des Abfrageschritts 68 wird mit dem Speicherschritt 64 fortgefahren, wie oben erläutert. In einem derartigen Fall liegt der abzuspeichernde Fehler vor, dass das Anlasserrelais 4 immer noch durchschaltet, obwohl der erste Deaktivierungsausgang 17 für den zugehörigen ersten Leistungsverstärker 8 auf "High" gesetzt ist.

Bei positivem Ergebnis J des Abfrageschritts 68 erfolgt in einem weiteren Abfrageschritt 69 die Abfrage, ob das Signal auf dem Freigabe-Eingang 28 mittlerweile auf einen "High"-Pegel gewechselt hat. Dies ist dann der Fall, wenn Kraftschluß zwischen Brennkraftmaschine und Antriebsstrang vorliegt, also bei einer Brennkraftmaschine mit Automatikgetriebe der Wählhebel von P/N in eine Fahrstufe umgeschaltet ist bzw. wenn bei einer Brennkraftmaschine mit Schaltgetriebe bei eingelegtem Gang die Kupplung losgelassen wird. Zur redundanten Kontrolle des Pegelwechsels auf dem Haupt-Freigabe-Signalkanal 29 von "Low" nach "High" im Abfrageschritt 69 werden zudem die Hilfs-Freigabe-Signalkanäle 31 und 34 über die Hilfs-Freigabe-Eingänge 32 und 35 des Steuerelektronik-Bausteins 15 abgefragt. Diese Abfragen sind der Übersichtlichkeit halber im Ablaufschema der Fig. 2 nicht dargestellt.

Bei positivem Ergebnis J des Abfrageschritts 69, das heißt, bei Beendigung der Bereitstellung des Freigabesignals "Low" auf dem Haupt-Freigabe-Signalkanal 29, liegt die Situation vor, in der bei funktionsfähigem Hardware-Freigabe-Schaltkanal 22 dieser den noch aktiven zweiten Leistungsverstärker 9 trotz der noch aktiven Ansteuerung über die Ausgänge 14, 19 des Steuerelektronik-Bausteins 15 abschaltet. Ob ein derartiges Abschalten erfolgt ist, wird nach positivem Ergebnis J des Abfrageschritts 69 in einem Abfrageschritt 70 geprüft, in dem abgefragt wird, ob der A/D-Wandler 45 einen "High"-Pegel erfasst. Dies würde bedeuten, dass der zweite Anlasser-Endstufen-Transistor 11 getrennt durch den Hardware-Freigabe-Schaltkanal 22 über den zweiten Leistungsverstärker 9 abgeschaltet wurde. Bei positivem Abfrageergebnis J des Abfrageschritts 70, d.h. bei einem "High"-Pegel am A/D-Wandler 45, erfolgt in einem Speicherschritt 71 der Eintrag in den Datenspeicher 56, dass der Hardware-Freigabe-Schaltkanal 22, was das Ansteuern des Leistungsverstärkers 9 angeht, funktionsfähig ist. Es folgt in diesem Fall der Deaktivierungsschritt 65, wie oben erläutert.

Bei negativem Abfrageergebnis N des Abfrageschritts 70 liegt ein Fehler vor, da die Diagnoseleitung 44 "Low"-Pegel aufweist, obwohl der zweite Leistungsverstärker 9 über den Hardware-Freigabe-Schaltkanal 22 und die zweite Steuerklemme 18 deaktiviert hätte werden müssen. Bei negativem Abfrageergebnis N des Abfrageschritts 70 und gleichzeitig einer Bestätigung der Beendigung der Bereitstellung des Freigabesignals über die redundanten Hilfs-Freigabe-Signalkanäle 31 und 34 erfolgt in einem Deaktivierungsschritt 72 eine Deaktivierung des zweiten Leistungsverstärkers 9 durch "High"-Setzen des zweiten Deaktivierungsausgangs 19 und "Low"-Setzen des Aktivierungsausgangs 14.

In einem nachfolgenden Abfrageschritt 73 wird nochmals geprüft, ob das Signal am zweiten A/D-Wandler 45 von "Low" nach "High" gewechselt hat, was ein Abschalten des zweiten Leistungsverstärkers 9 über den Steuerelektronik-Baustein 15 wiedergeben würde. Bei positivem Abfrageergebnis J des Abfrageschritts 73 liegt eindeutig ein Fehler im Hardware-Freigabe-Schaltkanal 22 vor, da sich durch den Deaktivierungsschritt 72 der zweite Leistungsverstärker 9 über den Steuerelektronik-Baustein 15 abschalten ließ, dieser jedoch nicht automatisch vom Hardware-Freigabe-Schaltkanal 22 nach Beendigung der Freigabe abgeschaltet wurde. Daher erfolgt in diesem Fall ein Ausgabeschritt 74 in den Datenspeicher 56 mit dem Inhalt, dass ein Fehler im Hardware-Freigabe-Schaltkanal 22 vorliegt. Dieser Fehler wird einerseits auf dem LCD-Display angezeigt und andererseits durch Ansteuerung der Warnlampe 55 über die Ausgabeleitung 54 visualisiert. Bei negativem Abfrageergebnis N des Abfrageschritts 73 steht fest, dass sich der zweite Leistungsverstärker 9 weder über den Steuerelektronik-Baustein 15, noch über den Hardware-Freigabe-Schaltkanal 22 hat abschalten lassen, oder es liegt ein Fehler im zweiten A/D-Wandler 45 vor. Der Grund für derartige Fehler kann ein Fehler in der durch den zweiten Leistungsverstärker 9 und dem zweiten Anlasser-Endstufentransistor 11 gebildeten Endstufe oder ein Kurzschluss nach Masse sein. In diesem Fall erfolgt in einem Ausgabeschritt 75 ein Dateneintrag in den Datenspeicher 56 des Inhalts, dass das vom A/D-Wandler 45 erfasste Signal dauerhaft "Low" ist.

Bei negativem Abfrageergebnis N des Abfrageschritts 69, d.h. bei länger andauerndem "Low"-Pegel auf dem Freigabe-Eingang 28, wird das Signal auf dem Freigabe-Eingang 28 durch einen Abfrageschritt 76 gegengeprüft, in dem abgefragt wird, ob das von der Getriebesteuerung empfangene Freigabesignal über den Hilfs-Freigabe-Eingang 32 oder im Falle eines Handschaltgetriebes über das Freigabesignal über den weiteren Hilfs-Freigabe-Eingang 35 durch einen "High"-Pegel einen Kraftschluss zwischen der Brennkraftmaschine und deren Antriebsstrang anzeigt. Bei positivem Abfrageergebnis J, d.h. bei angezeigtem Kraftschluss, wird in einem Ausgabeschritt 77 in den Datenspeicher 56 die Information eingetragen, dass ein Fehler beim im Freigabe-Eingang 28 gemessenen Freigabesignal vorliegt. Dieser Eintrag wird anschließend an das LCD-Display weitergegeben. Es wird dann mit dem Speicherschritt 64 fortgefahren, wie oben erläutert.

Bei negativem Abfrageergebnis N des Abfrageschritts 76, d.h. bei durch einen der Hilfs-Freigabe-Eingänge 32, 35 bestätigtem, nicht vorhandenem Kraftschluss, wird mit dem Deaktivierungsschritt 67 fortgefahren und somit gewartet, bis im Abfrageschritt 69 das Signal am Freigabe-Eingang 28 auf einen "High"-Pegel gewechselt hat..

Die Startvorrichtung 1 wird so dimensioniert, dass bei einem Kurzschluss des Kondensators 78 nach Masse im Fall eines "High"-Pegels auf dem Haupt-Freigabe-Signalkanal 29 immer noch ein "High"-Pegel am Freigabe-Eingang 28 erkannt wird. Somit ist der Software-Freigabe-Schaltkanal 26 noch aktiv, auch wenn der Hardware-Freigabe-Schaltkanal 22 durch den kurzgeschlossenen Kondensator 78 nicht mehr funktionsfähig ist. Der Anlasser 2 kann somit noch angesteuert und gleichzeitig die Warnlampe 55 eingeschaltet sowie eine entsprechende Warnmeldung auf dem LCD-Display ausgegeben werden, mit der der Benutzer zur Durchführung einer Wartung der Startvorrichtung 1 aufgefordert wird. Die Brennkraftmaschine kann in einem derartigen Fall über den Software-Freigabe-Schaltkanal 26 auch bei Vorliegen eines Fehlers im Hardware-Freigabe-Schaltkanal 22 weiter gestartet und betrieben werden.

Bei einem dem Verfahrensablauf gemäß Fig. 2 nachfolgenden entsprechenden Startvorgang der Brennkraftmaschine erfolgt im Deaktivierungsschritt 67 ein Deaktivieren nicht zunächst des ersten Leistungsverstärkers 8, wie oben beschrieben, sondern zunächst des zweiten Leistungsverstärkers 9. In diesem Fall kann das Deaktivieren des ersten Leistungsverstärkers 8 über den in der Steuerklemme 16 endenden Zweig des Hardware-Freigabe-Schaltkanals 22 analog zum oben Beschriebenen geprüft und diagnostiziert werden. Auf diese Weise wird bei aufeinanderfolgenden Startvorgängen alternierend bei jedem Start der Durchgriff des mit dem Steuerklemmen 16 bzw. 18 endenden jeweiligen Zweiges des Hardware-Freigabe-Schaltkanals 22 auf die Leistungsverstärker 8 bzw. 9, die Anlasser-Endstufentransistoren 10 bzw. 11 sowie die Anlasserrelais 4 bzw. 5 geprüft.

Sind mehr als zwei Leistungsverstärker vorgesehen, deren Hardware-Freigabe geprüft werden soll, kann die gesteuerte Deaktivierung bzw. Nicht-Deaktivierung von Leistungsverstärkern bei aufeinanderfolgenden Startvorgängen in einer vorgegebenen und/oder statistischen Reihenfolge geschehen, welche von einer nicht dargestellten Auswahleinrichtung eingerichtet wird.

Eine Unterbrechung im Haupt-Freigabe-Signalkanal 29 im Signalweg nach der Abzweigung des Software-Freigabe-Schaltkanals 26 vor oder nach dem Verzweigungsknoten 21 oder ein Kurzschluss des Kondensators 78, welche die Funktion des Hardware-Freigabe-Schaltkanals 22 beeinträchtigen, können durch die geschilderte Diagnose des Hardware-Freigabe-Schaltkanals 23 sicher erkannt werden. Eine derartige Unterbrechung kann ohne das beschriebene Verfahren in der Regel nicht durch einen Vergleich der Freigabesignale auf den Eingängen 28, 32 und 35 durch den Steuerelektronik-Baustein 15 erkannt werden.

## Patentansprüche

1. Startvorrichtung (1) für eine Brennkraftmaschine,
- mit einer Schaltsteuereinrichtung (7) zum Ansteuern eines Startermotors (2), umfassend:
- mindestens einen Leistungsschaltbaustein (4, 5), der den Startermotor (2) mit einer Spannungsquelle (6) verbindet und der über mindestens eine dem mindestens einen Leistungsschaltbaustein (4, 5) zugeordnete Steuerleitung (16, 18) und mindestens eine dem mindestens einen Leistungsschaltbaustein (4, 5) zugeordnete Ansteuerstufe (10, 11) aktiviert wird;
- eine Steuerelektronik (15) zur Ansteuerung des mindestens einen Leistungsschaltbausteins (4, 5);
- eine den Kraftfluss der Brennkraftmaschine erfassende Freigabeeinrichtung (29-36), die derart ausgeführt ist, dass sie, wenn kein Kraftschluss zwischen der Brennkraftmaschine und einem dieser zugeordneten Getriebe vorliegt, auf einem Freigabe-Signalkanal (29, 31, 34) ein Freigabesignal zur Freigabe des Aktivierungs-Schaltvorgangs durch die mindestens eine Steuerleitung (16, 18) bereitstellt, umfassend:
- einen von der Steuerelektronik (15) unabhängig arbeitenden ersten Freigabe-Schaltkanal (22),
- einen mit der Steuerelektronik (15) zusammenarbeitenden zweiten Freigabe-Schaltkanal (26),
- wobei die Freigabe-Schaltkanäle (22, 26) so eingerichtet sind, dass eine Einleitung des Aktivierungs-Schaltvorgangs nur bei gleichzeitiger Freigabe-Schaltstellung der Freigabe-Schaltkanäle (22, 26) erfolgt;
**gekennzeichnet durch**
- eine Diagnoseeinrichtung (40 - 45), wobei mindestens zwei in Reihe geschaltete Leistungsschaltbausteine (4, 5) vorgesehen sind und wobei die Diagnoseeinrichtung (40 - 45) mit der Steuerelektronik (15) zusammenarbeitet und derart ausgeführt ist, dass sie beim Beenden der Bereitstellung des Freigabesignals (29) für den Aktivierungs-Schaltvorgang mindestens einen Leistungsschaltbaustein (4, 5) nicht über die Steuerelektronik (15) deaktiviert und zur Diagnose des ersten Freigabe-Schaltkanals (22) den Schaltzustand der Ansteuerstufen (10,11) des nicht deaktivierten Leistungsschaltbausteins (4,5) über Diagnoseleitungen (41, 44) der Diagnoseeinrichtung (40 - 45) erfasst, wobei die Diagnoseeinrichtung (40 - 45) derart ausgeführt ist, dass sie das Abschalten eines Ausgangs der Ansteuerstufen (10, 11) mit Beenden der Bereitstellung des Freigabesignals (29) überwacht.

2. Startvorrichtung nach Anspruch 1, **dadurch gekennzeichnet, dass** der erste Freigabe-Schaltkanal (22) als Hardware-Freigabe-Schaltkanal ausgeführt ist.

3. Startvorrichtung nach Anspruch 1 oder 2, **dadurch gekennzeichnet, dass** der zweite Frelgabe-Schaltkanal (26) als Software-Freigabe-Schaltkanal ausgeführt ist, wobei er über einen Mikrocomputer der Steuerelektronik (15) angesteuert wird.

4. Startvorrichtung nach einem der vorhergehenden Ansprüche, **dadurch gekennzeichnet, dass** die Diagnoseeinrichtung (40 - 45) mindestens einen A/D-Wandler zur Erfassung der Freigabe-Schaltstellung umfasst.

5. Startvorrichtung nach Anspruch 1, **dadurch gekennzeichnet, dass** die Diagnoseeinrichtung (40 - 45) derart ausgeführt ist, dass sie bei aufeinanderfolgenden Startermotor-Ansteuerungen für die Brennkraftmaschine beim Beenden der Bereitstellung des Freigabesignals für den Aktivierungs-Schaltvorgang im Vergleich zum vorhergehenden Startvorgang jeweils mindestens einen anderen Leistungsschaltbaustein (4, 5) nicht deaktiviert.

6. Startvorrichtung nach Anspruch 5, **dadurch gekennzeichnet, dass** die Diagnoseeinrichtung (40 - 45) eine Auswahleinrichtung aufweist, durch die eine gesteuerte Nicht-Deaktivierung von Leistungsschaltbausteinen bei aufeinanderfolgenden Startmotor-Ansteuerungen nach einer vorgegebenen Nicht-Deaktivierungssequenz erfolgt.

7. Startvorrichtung nach einem der vorhergehenden Ansprüche, **dadurch gekennzeichnet, dass** die Diagnoseeinrichtung (40 - 45) derart ausgeführt ist, dass sie beim Erfassen eines aktiven Schaltzustandes auf einer der Steuerleitungen (16, 18) nach Beenden der Bereitstellung des Freigabesignals über die Steuerelektronik (15) eine Deaktivierung aller Leistungsschaltbausteine (4, 5) einleitet

8. Startvorrichtung nach einem der vorhergehenden Ansprüche, **dadurch gekennzeichnet, dass** die Diagnoseeinrichtung (40 - 45) derart ausgebildet ist, dass sie bei einem Erfassen eines aktiven Schaltzustandes auf einer der Steuelietungen (16, 18) nach Beenden der Bereitstellung des Freigabesignals über die Steuerelektronik (15) einen Warnsignalgeber (55) ansteuert.

9. Startvorrichtung nach einem der vorhergehenden Ansprüche, **dadurch gekennzeichnet, dass** die Diagnoseeinrichtung (40-45) derart ausgebildet ist, dass sie bei einem Erfassen eines aktiven Schaltzustandes auf einer der Steuerleitungen (16, 18) nach Beenden der Bereitstellung des Freigabesignals über die Steuerelektronik (15) einen Eintrag einer dem Fehler zugeordneten Datensequenz in einem mit der Steuerelektronik (15) zusammenarbeitenden auslesbaren Speichermedium (56) veranlasst.

10. Startvorrichtung nach einem der vorhergehenden Ansprüche, **gekennzeichnet durch** einen mit der Freigabeeinrichtung (29 - 36) zur Erfassung des Laufs der Brennkraftmaschine zusammenarbeitenden Drehzahlsensor (52).

11. Startvorrichtung nach einem der vorhergehenden Ansprüche, **dadurch gekennzeichnet, dass** die Freigabeeinrichtung (29 - 36) aufweist: den Freigabe-Signalkanal (29), der derart ausgeführt ist, dass er abhängig von einem ersten Betriebsparameter der Brennkraftmaschine. ein Freigabesignal zur Freigabe des Aktivierungs-Schaltvorgangs bereitstellt, und einen weiteren Freigabe-Signalkanal (31, 34), der derart ausgeführt ist, dass er abhängig von einem zweiten Betriebsparameter der Brennkraftmaschine ein unabhängiges zweites Freigabesignal bereitstellt, welches von der Steuerelektronik (15) erfasst wird.

12. Startvorrichtung nach Anspruch 11, **dadurch gekennzeichnet, dass** die Freigabeeinrichtung (29 - 36) zur Erfassung eines der beiden Betriebsparameter mindestens einen den Kraftschluss zwischen einem Motor und einem Getriebe oder Triebstrang der Brennkraftmaschine erfassenden Kraftschluss-Sensor (30, 33, 36) aufweist.

13. Verfahren zum Starten einer Brennkraftmaschine mit einem Startermotor (2),
- bei dem eine Schaltsteuereinrichtung (7) den Startermotor (2) ansteuert, indem
- mindestens ein Leistungsschaltbaustein (4, 5) den Startermotor (2) mit einer Spannungsquelle (6) verbindet und der Leistungsschaltbaustein (4, 5) über mindestens eine dem mindestens einen Leistungsschaltbaustein (4, 5) zugeordnete Steuerleitung (16, 18) und mindestens eine dem mindestens einen Leistungsschaltbaustein (4, 5) zugeordnete Ansteuerstufe (10, 11) aktiviert wird;
- eine Steuerelektronik (15) den mindestens einen Leistungsschaltbaustein (4, 5) ansteuert;
wobei
- eine den Kraftfluss der Brennkraftmaschine erfassende Freigabeeinrichtung (29 - 36) der Schaltsteuereinrichtung (7) dann, wenn kein Kraftschluss zwischen der Brennkraftmaschine und einem dieser zugeordneten Getriebe vorliegt, ein Freigabesignal zur Freigabe des Aktivierungs-Schattvorgangs über die mindestens eine Steuerleitung (16, 18) bereitstellt, wobei
- ein von der Steuerelektronik (15) unabhängig arbeitender erster Freigabe-Schaltkanal (22) der Freigabeeinrichtung (29 - 36) abhängig vom Freigabesignal schaltet und
- ein mit der Steuerelektronik (15) zusammenarbeitender zweiter Freigabe-Schaltkanal (26) der Freigabeeinrichtung (29 - 36) abhängig vom Freigabesignal schaltet und
- die Freigabe-Schaltkanäle (22, 26) den Aktivierungs-Schaltvorgang nur bei gleichzeitiger Freigabe-Schaltstellung des ersten und zweiten Freigabekanals (22, 26) einleiten;
**gekennzeichnet durch**
- eine Diagnoseeinrichtung (40 - 45) der Schaltsteuereinrichtung (7), wobei mindesten zwei in Reihe geschaltete Leistungsbausteine (4, 5) vorgesehen sind und wobei die Di-agnoseeinrichtung (40 - 45) mit der Steuerelektronik (15) zusammenarbeitet und beim Beenden der Bereitstellung des Freigabesignals (29) für den Aktivierungs-Schaltvorgang mindestens einen Leistungsschaltbaustein (4, 5) nicht über die Steuerelektronik (15) deaktiviert und zur Diagnose des ersten Freigabe-- Schaltkanals (22) den Schaltzustand der Ansteuerstufen (10, 11) des nicht deaktivierten Leistungsschaltbausteins (4, 5) über Diagnoseleitungen (41, 44) der Diagnoseeinrichtung (40 - 45) erfasst, wobei die Diagnoseeinrichtung (40 - 45) derart ausgeführt ist, dass sie das Abschalten eines Ausgangs der Ansteuerstufen (10, 11) mit Beenden der Bereitstellung des Freigabesignals (29) überwacht.

14. Verfahren nach Anspruch 13, **dadurch gekennzeichnet, dass** die Diagnoseeinrichtung (40 - 45) die Freigabe-Schaltstellung über mindestens einen A/D-Wandler (42, 45) erfasst.

15. Verfahren nach Anspruch 13 oder 14, **dadurch gekennzeichnet, dass** die Diagnoseeinrichtung (40 - 45) bei aufeinanderfolgenden Startmotor-Ansteuerungen für die Brennkraftmaschine beim Beenden der Bereitstellung des Freigabesignals für den Aktivierungs-Schaltvorgang im Vergleich zum vorhergehenden Startprogramm jeweils mindestens einen anderen Leistungsschaltbaustein (4, 5) nicht deaktiviert.

16. Verfahren nach Anspruch 15, **dadurch gekennzeichnet, dass** eine Auswahleinrichtung der Diagnoseeinrichtung (40 - 45) eine gesteuerte Nicht-Deaktivierung von Leistungsschaltbausteinen (4, 5) bei aufeinanderfolgenden Startmotor-Ansteuerungen nach einer vorgegebenen Nicht-Deaktivierungssequenz vornimmt.

17. Verfahren nach einem der Ansprüche 13 bis 16, **dadurch gekennzeichnet, dass** die Diagnoseeinrichtung (40 - 45) bei einem Erfassen eines aktiven Schaltzustandes nach Beenden der Bereitstellung des Freigabesignals über die Steuerelektronik eine Deaktivierung aller Leistungsschaltbausteine (4, 5) einleitet.

18. Verfahren nach einem der Ansprüche 13 bis 17, **dadurch gekennzeichnet, dass** die Diagnoseeinrichtung (40 - 45) bei einem Erfassen eines aktiven Schaltzustandes nach Beenden der Bereitstellung des Freigabesignals über die Steuerelektronik (15) einen Warnsignalgeber (55) ansteuert.

19. Verfahren nach einem der Ansprüche 13 bis 17, **dadurch gekennzeichnet, dass** die Diagnoseeinrichtung (40 - 45) bei einem Erfassen eines aktiven Schaltzustandes nach Beenden der Bereitstellung des Freigabesignals über die Steuerelektronik (15) eine dem Fehler zugeordnete Datensequenz in einem mit der Steuerelektronik (15) zusammenarbeitenden auslesbaren Speichermedium (56) abspeichert.

20. Verfahren nach einem der Ansprüche 13 bis 19, **dadurch gekennzeichnet, dass** die Freigabeeinrichtung (29 - 36) zur Erfassung des Laufs der Brennkraftmaschine mit einem Drehzahlsensor (52) zusammenarbeitet.

21. Verfahren nach einem der Ansprüche 13 bis 20, **dadurch gekennzeichnet, dass** die Freigabeeinrichtung (29 - 36) den Freigabe-Signalkanal (29), der abhängig von einem ersten Betriebsparameter der Brennkraftmaschine ein Freigabesignal zur Freigabe des Aktivierungs-Schattvorgangs bereitstellt, und einen weiteren Freigabe-Signalkanal (31, 34) umfasst, der abhängig von einem zweiten Betriebsparameter der Brennkraftmaschime ein unabhängiges zweites Freigabesignal bereitstellt, welches von der Steuerelektronik (15) erfasst wird.

22. Verfahren nach Anspruch 21, **dadurch gekennzeichnet, dass** die Freigabeeinrichtung (29 - 36) den Kraftschluss zwischen einem Motor und einem Getriebe oder Triebstrang der Brennkraftmaschine als einen der beiden Betriebsparameter erfasst.

## Claims

1. Starting apparatus (1) for an internal combustion engine,
- having a switching control device (7) for actuating a starter motor (2), comprising:
- at least one circuit breaker module (4, 5) which connects the starter motor (2) to a voltage source (6) and is activated via at least one control line (16, 18) assigned to the at least one circuit breaker module (4, 5) and at least one actuating stage (10, 11) assigned to the at least one circuit breaker module (4, 5);
- control electronics (15) for actuating the at least one circuit breaker module (4, 5);
- an enabling device (29-36) which detects the force flux of the internal combustion engine and is designed in such a manner that, when there is no frictional connection between the internal combustion engine and a transmission assigned to the latter, it provides, in an enable signal channel (29, 31, 34), an enable signal for enabling the activation switching operation by means of the at least one control line (16, 18), comprising:
- a first enable switching channel (22) which operates independently of the control electronics (15),
- a second enable switching channel (26) which cooperates with the control electronics (15),
- the enable switching channels (22, 26) being set up in such a manner that the activation switching operation is initiated only with the simultaneous enable switching position of the enable switching channels (22, 26),
**characterized by**
- a diagnostic device (40-45), at least two circuit breaker modules (4, 5) connected in series being provided, and the diagnostic device (40-45) cooperating with the control electronics (15) and being designed in such a manner that it does not deactivate at least one circuit breaker module (4, 5) via the control electronics (15) at the end of the provision of the enable signal (29) for the activation switching operation and, in order to diagnose the first enable switching channel (22), detects the switching state of the actuating stages (10, 11) of the non-deactivated circuit breaker module (4, 5) via diagnostic lines (41, 44) of the diagnostic device (40-45), the diagnostic device (40-45) being designed in such a manner that it monitors the disconnection of an output of the actuating stages (10, 11) at the end of the provision of the enable signal (29).

2. Starting apparatus according to Claim 1, **characterized in that** the first enable switching channel (22) is in the form of a hardware enable switching channel.

3. Starting apparatus according to Claim 1 or 2, **characterized in that** the second enable switching channel (26) is in the form of a software enable switching channel, said switching channel being actuated via a microcomputer of the control electronics (15).

4. Starting apparatus according to one of the preceding claims, **characterized in that** the diagnostic device (40-45) comprises at least one A/D converter for detecting the enable switching position.

5. Starting apparatus according to Claim 1, **characterized in that** the diagnostic device (40-45) is designed in such a manner that, in the case of successive starter motor actuating operations for the internal combustion engine, it does not deactivate at least one other circuit breaker module (4, 5) in each case in comparison with the preceding switching operation at the end of the provision of the enable signal for the activation switching operation.

6. Starting apparatus according to Claim 5, **characterized in that** the diagnostic device (40-45) has a selection device which is used to effect controlled non-deactivation of circuit breaker modules according to a predefined non-deactivation sequence in the case of successive starter motor actuating operations.

7. Starting apparatus according to one of the preceding claims, **characterized in that** the diagnostic device (40-45) is designed in such a manner that it initiates deactivation of all circuit breaker modules (4, 5) via the control electronics (15) upon detecting an active switching state on one of the control lines (16, 18) after the end of the provision of the enable signal.

8. Starting apparatus according to one of the preceding claims, **characterized in that** the diagnostic device (40-45) is designed in such a manner that it actuates a warning signal transmitter (55) via the control electronics (15) upon detecting an active switching state on one of the control lines (16, 18) after the end of the provision of the enable signal.

9. Starting apparatus according to one of the preceding claims, **characterized in that** the diagnostic device (40-45) is designed in such a manner that it causes an entry of a data sequence assigned to the fault in a storage medium (56), which can be read and cooperates with the control electronics (15), via the control electronics (15) upon detecting an active switching state on one of the control lines (16, 18) after the end of the provision of the enable signal.

10. Starting apparatus according to one of the preceding claims, **characterized by** a rotational speed sensor (52) which cooperates with the enabling device (29-36) in order to detect the running of the internal combustion engine.

11. Starting apparatus according to one of the preceding claims, **characterized in that** the enabling device (29-36) has: the enable signal channel (29), which is designed in such a manner that it provides an enable signal for enabling the activation switching operation on the basis of a first operating parameter of the internal combustion engine, and a further enable signal channel (31, 34) which is designed in such a manner that it provides an independent second enable signal, which is detected by the control electronics (15), on the basis of a second operating parameter of the internal combustion engine.

12. Starting apparatus according to Claim 11, **characterized in that**, in order to detect one of the two operating parameters, the enabling device (29-36) has at least one frictional connection sensor (30, 33, 36) which detects the frictional connection between an engine and a transmission or drive train of the internal combustion engine.

13. Method for starting an internal combustion engine with a starter motor (2),
- in which a switching control device (7) actuates the starter motor (2) by
- at least one circuit breaker module (4, 5) connecting the starter motor (2) to a voltage source (6) and the circuit breaker module (4, 5) being activated via at least one control line (16, 18) assigned to the at least one circuit breaker module (4, 5) and at least one actuating stage (10, 11) assigned to the at least one circuit breaker module (4, 5);
- control electronics (15) actuating the at least one circuit breaker module (4, 5);
wherein
- an enabling device (29-36) of the switching control device (7), which detects the force flux of the internal combustion engine, provides an enable signal for enabling the activation switching operation via the at least one control line (16, 18) when there is no frictional connection between the internal combustion engine and a transmission assigned to the latter,
- a first enable switching channel (22) of the enabling device (29-36), which operates independently of the control electronics (15), switching on the basis of the enable signal, and
- a second enable switching channel (26) of the enabling device (29-36), which cooperates with the control electronics (15), switching on the basis of the enable signal, and
- the enable switching channels (22, 26) initiating the activation switching operation only with the simultaneous enable switching position of the first and second enable channels (22, 26),
**characterized by**
- a diagnostic device (40-45) of the switching control device (7), at least two circuit breaker modules (4, 5) connected in series being provided, and the diagnostic device (40-45) cooperating with the control electronics (15) and not deactivating at least one circuit breaker module (4, 5) via the control electronics (15) at the end of the provision of the enable signal (29) for the activation switching operation and, in order to diagnose the first enable switching channel (22), detecting the switching state of the actuating stages (10, 11) of the non-deactivated circuit breaker module (4, 5) via diagnostic lines (41, 44) of the diagnostic device (40-45), the diagnostic device (40-45) being designed in such a manner that it monitors the disconnection of an output of the actuating stages (10, 11) at the end of the provision of the enable signal (29).

14. Method according to Claim 13, **characterized in that** the diagnostic device (40-45) detects the enable switching position via at least one A/D converter (42, 45).

15. Method according to Claim 13 or 14, **characterized in that**, in the case of successive starter motor actuating operations for the internal combustion engine, the diagnostic device (40-45) does not deactivate at least one other circuit breaker module (4, 5) in each case in comparison with the preceding starting program at the end of the provision of the enable signal for the activation switching operation.

16. Method according to Claim 15, **characterized in that** a selection device of the diagnostic device (40-45) carries out controlled non-deactivation of circuit breaker modules (4, 5) according to a predefined non-deactivation sequence in the case of successive starter motor actuating operations.

17. Method according to one of Claims 13 to 16, **characterized in that** the diagnostic device (40-45) initiates deactivation of all circuit breaker modules (4, 5) via the control electronics upon detecting an active switching state after the end of the provision of the enable signal.

18. Method according to one of Claims 13 to 17, **characterized in that** the diagnostic device (40-45) actuates a warning signal transmitter (55) via the control electronics (15) upon detecting an active switching state after the end of the provision of the enable signal.

19. Method according to one of Claims 13 to 17, **characterized in that** the diagnostic device (40-45) stores a data sequence assigned to the fault in a storage medium (56), which can be read and cooperates with the control electronics (15), via the control electronics (15) upon detecting an active switching state after the end of the provision of the enable signal.

20. Method according to one of Claims 13 to 19, **characterized in that** the enabling device (29-36) cooperates with a rotational speed sensor (52) in order to detect the running of the internal combustion engine.

21. Method according to one of Claims 13 to 20, **characterized in that** the enabling device (29-36) comprises the enable signal channel (29), which provides an enable signal for enabling the activation switching operation on the basis of a first operating parameter of the internal combustion engine, and a further enable signal channel (31, 34) which provides an independent second enable signal, which is detected by the control electronics (15), on the basis of a second operating parameter of the internal combustion engine.

22. Method according to Claim 21, **characterized in that** the enabling device (29-36) detects the frictional connection between an engine and a transmission or drive train of the internal combustion engine as one of the two operating parameters.

## Revendications

1. Dispositif de démarrage (1) pour un moteur à combustion interne,
- comprenant un dispositif de commande de commutation (7) pour commander un démarreur (2), comprenant :
- au moins un module de commutation de puissance (4, 5), qui relie le démarreur (2) à une source de tension (6) et qui est activé par le biais d'au moins une ligne de commande (16, 18) associée à l'au moins un module de commutation de puissance (4, 5) et au moins un étage de commande (10, 11) associé à l'au moins un module de commutation de puissance (4, 5) ;
- une électronique de commande (15) pour commander l'au moins un module de commutation de puissance (4, 5) ;
- un dispositif de libération (29 - 36) détectant le flux de forces du moteur à combustion interne, qui est réalisé de telle sorte que lorsqu'il n'y a pas de flux de forces entre le moteur à combustion interne et une transmission associée à celui-ci, il fournit, sur un canal de signal de libération (29, 31, 34) un signal de libération pour libérer l'opération de commutation d'activation par l'au moins une ligne de commande (16, 18), comprenant :
- un premier canal de commutation de libération (22) fonctionnant indépendamment de l'électronique de commande (15),
- un deuxième canal de commutation de libération (26) coopérant avec l'électronique de commande (15),
- les canaux de commutation de libération (22, 26) étant prévus de manière à ce qu'une activation de l'opération de commutation d'activation n'ait lieu que dans une position de commutation de libération simultanée des canaux de commutation de libération (22, 26) ;
**caractérisé par**
- un dispositif de diagnostic (40 - 45), au moins deux modules de commutation de puissance (4, 5) montés en série étant prévus et le dispositif de diagnostic (40 - 45) coopérant avec l'électronique de commande (15) et étant réalisé de telle sorte qu'à la fin de la fourniture du signal de libération (29) pour l'opération de commutation d'activation, il ne désactive pas au moins un module de commutation de puissance (4, 5) par le biais de l'électronique de commande (15) et que pour le diagnostic du premier canal de commutation de libération (22), il détecte l'état de commutation des étages de commande (10, 11) du module de commutation de puissance non désactive (4, 5) par le biais de lignes de diagnostic (41, 44) du dispositif de diagnostic (40 - 45), le dispositif de diagnostic (40 - 45) étant réalisé de telle sorte qu'il contrôle la coupure d'une sortie des étages de commande (10, 11) à la fin de la fourniture du signal de libération (29).

2. Dispositif de démarrage selon la revendication 1, **caractérisé en ce que** le premier canal de commutation de libération (22) est réalisé sous forme de canal de commutation de libération matériel.

3. Dispositif de démarrage selon la revendication 1 ou 2, **caractérisé en ce que** le deuxième canal de commutation de libération (26) est réalisé sous forme de canal de commutation de libération logiciel et est commandé par le biais d'un micro-ordinateur de l'électronique de commande (15).

4. Dispositif de démarrage selon l'une quelconque des revendications précédentes, **caractérisé en ce que** le dispositif de diagnostic (40 - 45) comprend au moins un convertisseur A/N pour détecter la position de commutation de libération.

5. Dispositif de démarrage selon la revendication 1, **caractérisé en ce que** le dispositif de diagnostic (40 - 45) est réalisé de telle sorte que, par comparaison avec l'opération de démarrage précédente, il ne désactive pas à chaque fois au moins un autre module de commutation de puissance (4, 5) dans le cas de commandes successives du démarreur pour le moteur à combustion interne, à la fin de la fourniture du signal de libération pour l'opération de commutation d'activation.

6. Dispositif de démarrage selon la revendication 5, **caractérisé en ce que** le dispositif de diagnostic (40 - 45) présente un dispositif de sélection par le biais duquel a lieu une non-désactivation commandée de modules de commutation de puissance en cas de commandes successives du démarreur en fonction d'une séquence de non-désactivation prédéfinie.

7. Dispositif de démarrage selon l'une quelconque des revendications précédentes, **caractérisé en ce que** le dispositif de diagnostic (40 - 45) est réalisé de telle sorte qu'à la détection d'un état de commutation actif sur l'une des lignes de commande (16, 18) à la fin de la fourniture du signal de libération, il introduise par le biais de l'électronique de commande (15) une désactivation de tous les modules de commutation de puissance (4, 5).

8. Dispositif de démarrage selon l'une quelconque des revendications précédentes, **caractérisé en ce que** le dispositif de diagnostic (40 - 45) est réalisé de telle sorte qu'à la détection d'un état de commutation actif sur l'une des lignes de commande (16, 18) à la fin de la fourniture du signal de libération, il commande par le biais de l'électronique de commande (15) un générateur de signal d'avertissement (55).

9. Dispositif de démarrage selon l'une quelconque des revendications précédentes, **caractérisé en ce que** le dispositif de diagnostic (40 - 45) est réalisé de telle sorte qu'à la détection d'un état de commutation actif sur l'une des lignes de commande (16, 18) à la fin de la fourniture du signal de libération, il autorise par le biais de l'électronique de commande (15) une entrée d'une séquence de données associée à l'erreur dans un support de mémoire (56) lisible coopérant avec l'électronique de commande (15).

10. Dispositif de démarrage selon l'une quelconque des revendications précédentes, **caractérisé par** un capteur de régime (52) coopérant avec le dispositif de libération (29 - 36) pour détecter le fonctionnement du moteur à combustion interne.

11. Dispositif de démarrage selon l'une quelconque des revendications précédentes, **caractérisé en ce que** le dispositif de démarrage (29 - 36) présente : le canal de signal de libération (29), qui est réalisé de telle sorte qu'il fournisse, en fonction d'un premier paramètre de fonctionnement du moteur à combustion interne, un signal de libération pour la libération de l'opération de commutation d'activation et un autre canal de signal de libération (31, 34), qui est réalisé de telle sorte qu'il fournisse, en fonction d'un deuxième paramètre de fonctionnement du moteur à combustion interne, un deuxième signal de libération indépendant qui est détecté par l'électronique de commande (15).

12. Dispositif de démarrage selon la revendication 11, **caractérisé en ce que** le dispositif de libération (29 - 36) pour la détection de l'un des deux paramètres de fonctionnement, présente au moins un capteur de flux de forces (30, 33, 36) détectant le flux de forces entre un moteur et une transmission ou une chaîne cinématique du moteur à combustion interne.

13. Procédé pour démarrer un moteur à combustion interne avec un démarreur (2),
- dans lequel un dispositif de commande de commutation (7) commande le démarreur (2), en ce que
- au moins un module de commutation de puissance (4, 5) relie le démarreur (2) à une source de tension (6) et le module de commutation de puissance (4, 5) est activé par le biais d'au moins une ligne de commande (16, 18) associée à l'au moins un module de commutation de puissance (4, 5) et d'au moins un étage de commande (10, 11) associé à l'au moins un module de commutation de puissance (4, 5) ;
- une électronique de commande (15) commande l'au moins un module de commutation de puissance (4, 5) ;
où
- un dispositif de libération (29 - 36) du dispositif de commande de commutation (7) détectant le flux de forces du moteur à combustion interne lorsqu'il n'y a aucun flux de forces entre le moteur à combustion interne et une transmission associée à celui-ci, fournit un signal de libération pour libérer l'opération de commutation d'activation par le biais de l'au moins une ligne de commande (16, 18),
où
- un premier canal de commutation de libération (22) du dispositif de libération (29 - 26) indépendant de l'électronique de commande (15) commute en fonction du signal de libération et
- un deuxième canal de commutation de libération (26) du dispositif de libération (29 - 36) coopérant avec l'électronique de commande (15) commute en fonction du signal de libération et
- les canaux de commutation de libération (22, 26) introduisent l'opération de commutation d'activation uniquement pour une position de commutation de libération simultanée du premier et du deuxième canal de libération (22, 26) ;
**caractérisé par**
- un dispositif de diagnostic (40 - 45) du dispositif de commande de commutation (7), au moins deux modules de puissance (4, 5) montés en série étant prévus et le dispositif de diagnostic (40 - 45) coopérant avec l'électronique de commande (15) et, à la fin de la fourniture du signal de libération (29) pour l'opération de commutation d'activation, ne désactivant pas par le biais de l'électronique de commande (15) au moins un module de commutation de puissance (4, 5), et pour le diagnostic du premier canal de commutation de libération (22), détectant l'état de commutation des étages de commande (10, 11) du module de commutation de puissance (4, 5) non désactivé, par le biais de lignes de diagnostic (41, 44) du dispositif de diagnostic (40 - 45), le dispositif de diagnostic (40 - 45) étant réalisé de telle sorte qu'il surveille la commutation d'une sortie des étages de commande (10, 11) à la fin de la fourniture du signal de libération (29).

14. Procédé selon la revendication 13, **caractérisé en ce que** le dispositif de diagnostic (40 - 45) détecte la position de commutation de libération par le biais d'au moins un convertisseur A/N (42, 45).

15. Procédé selon la revendication 13 ou 14, **caractérisé en ce que** le dispositif de diagnostic (40 - 45), en cas de commandes successives du démarreur pour le moteur à combustion interne, à la fin de la fourniture du signal de libération pour l'opération de commutation d'activation, par comparaison avec le programme de démarrage précédent, ne désactive pas à chaque fois au moins un autre module de commutation de puissance (4, 5).

16. Procédé selon la revendication 15, **caractérisé en ce qu'**un dispositif de sélection du dispositif de diagnostic (40 - 45) effectue une non-désactivation commandée de modules de commutation de puissance (4, 5) en cas de commandes successives du démarreur en fonction d'une séquence de non-désactivation prédéfinie.

17. Procédé selon l'une quelconque des revendications 13 à 16, **caractérisé en ce que** le dispositif de diagnostic (40 - 45), dans le cas d'une détection d'un état de commutation actif à la fin de la fourniture du signal de libération, introduit par le biais de l'électronique de commande une désactivation de tous les modules de commutation de puissance (4, 5).

18. Procédé selon l'une quelconque des revendications 13 à 17, **caractérisé en ce que** le dispositif de diagnostic (40 - 45), dans le cas d'une détection d'un état de commutation actif à la fin de la fourniture du signal de libération, commande par le biais de l'électronique de commande (15) un générateur de signal d'avertissement (55).

19. Procédé selon l'une quelconque des revendications 13 à 17, **caractérisé en ce que** le dispositif de diagnostic (40 - 45), dans le cas d'une détection d'un état de commutation actif à la fin de la fourniture du signal de libération, mémorise par le biais de l'électronique de commande (15) une séquence de données associée à l'erreur dans un support de mémoire (56) lisible coopérant avec l'électronique de commande (15).

20. Procédé selon l'une quelconque des revendications 13 à 19, **caractérisé en ce que** le dispositif de libération (29 - 36) pour la détection de la marche du moteur à combustion interne coopère avec un capteur de régime (52).

21. Procédé selon l'une quelconque des revendications 13 à 20, **caractérisé en ce que** le dispositif de libération (29 - 36) comprend le canal de signal de libération (29), qui fournit, en fonction d'un premier paramètre de fonctionnement du moteur à combustion interne, un signal de libération pour la libération de l'opération de commutation d'activation, et un autre canal de signal de libération (31, 34), qui fournit, en fonction d'un deuxième paramètre de fonctionnement du moteur à combustion interne, un deuxième signal de libération indépendant, qui est détecté par l'électronique de commande (15).

22. Procédé selon la revendication 21, **caractérisé en ce que** le dispositif de libération (29 - 36) détecte le flux de forces entre un moteur et une transmission ou une chaîne cinématique du moteur à combustion interne en tant que l'un des deux paramètres de fonctionnement.
